# EUROPEAN PATENT SPECIFICATION

(11) **EP 2 704 153 B1**
(45) Date of publication and mention of the grant of the patent: **10.10.2018**
(21) Application number: 13181990.6
(22) Date of filing: 28.08.2013
(51) Int. Cl.: G21F 9/02, G21C 19/317

(54) **Gas treatment equipment of nuclear power plant**
Gasbehandlungsausrüstung eines Kernkraftwerks
Équipement de traitement des gaz de centrale nucléaire

(30) Priority: 29.08.2012 JP 2012188374
(43) Date of publication of application: 05.03.2014
(73) Proprietor: Hitachi-GE Nuclear Energy, Ltd., Hitachi-shi Ibaraki 317-0073 (JP)
(72) Inventor: Noshita, Kenji, Chiyoda-ku, Tokyo 100-8280 (JP); Takii, Taichi, Hitachi-shi, Ibaraki 317-0073 (JP); Oda, Shingo, Hitachi-shi, Ibaraki 317-0073 (JP); Iizuka, Hidehiro, Chiyoda-ku, Tokyo 100-8280 (JP)
(74) Representative: Addiss, John William

(56) References cited:
- JP-A- H10 227 885
- JP-A- 2010 190 868
- US-A- 2 879 146
- US-A- 4 246 235
- US-A- 5 102 618

## Description

The present invention relates to a gas treatment equipment of a nuclear power plant and more particular to a gas treatment equipment of a nuclear power plan suitable for applying to a boiling water nuclear power plant.

In the boiling water nuclear power plant, when a pipe connected to a reactor pressure vessel is broken, steam including a radioactive substance discharged into a primary containment vessel from the broken portion of the pipe flows into cooling water of a suppression pool in a pressure suppression chamber installed in the primary containment vessel and hydrogen gas and oxygen gas are generated due to radiation decomposition of the cooling water. Such a phenomenon is referred to as loss of coolant accident. At the time of the loss of coolant accident, if water level in the reactor pressure vessel should lower and a nuclear fuel material in a fuel rod included in a fuel assembly loaded in a core in the reactor pressure vessel should rise in temperature, zirconium included in a fuel cladding for covering the nuclear fuel material of the fuel rod and the steam react and hydrogen gas is generated. The hydrogen gas is discharged from the reactor pressure vessel into the primary containment vessel.

As a countermeasure for the loss of coolant accident, in the boiling water nuclear power plant using the primary containment vessel having the pressure suppression chamber, even if hydrogen gas is generated in the primary containment vessel, when the boiling water nuclear power plant is in operation, the atmosphere in the primary containment vessel is replaced with nitrogen gas to prevent it from burning. Furthermore, in the boiling water nuclear power plant, a thermal hydrogen treatment equipment connected to the primary containment vessel with a pipe is installed. When the loss of coolant accident occurs, a blower is driven, thus the gas including hydrogen and oxygen in the primary containment vessel is supplied to the thermal hydrogen treatment equipment and the hydrogen and oxygen are recombined to be converted to steam by heating by an electric heater of the thermal hydrogen treatment equipment.

Further, in recent years, a passive autocatalytic hydrogen treatment equipment which is excellent in the passive safety and requires no outer power has been developed. An example of the passive autocatalytic hydrogen treatment equipment is described in Japanese Patent Laid-Open No. 10(1998)-227885. The passive autocatalytic hydrogen treatment equipment includes a catalyst for reacting hydrogen and oxygen and a chimney for storing the catalyst and is disposed in a drywell and the pressure suppression chamber in the primary containment vessel. Further, an example that the passive autocatalytic hydrogen treatment equipment is disposed in a nuclear building outside the primary containment vessel is described in Japanese Patent Laid-open No. 2009-69122.

Further, in the loss of coolant accident, in the reaction of zirconium and water, only hydrogen is generated as gas and no oxygen gas is generated, so that oxygen gas must be newly supplied to the recombination apparatus to make the total quantity of the generated hydrogen gas recombine with oxygen gas. Therefore, in the loss of coolant accident, as a method of removing hydrogen gas from the primary containment vessel without using oxygen gas, a method of bringing gas in the primary containment vessel into contact with a hydrogen permeable membrane, discharging the hydrogen gas passed through the hydrogen permeable membrane outside the primary containment vessel, and reducing the hydrogen concentration in the primary containment vessel is described in Japanese Patent Laid-Open No. 11(1999)-30694 and Japanese Patent Laid-open No. 2001-141868. The hydrogen gas separated from the inside of the primary containment vessel by the hydrogen permeable membrane is discharged as gas outside the hydrogen treatment equipment.

Japanese Patent Laid-open No. 2006-322768 describes a hydrogen elimination apparatus. The hydrogen elimination apparatus includes an ammonia composite catalytic layer connected to the primary containment vessel. The ammonia composite catalytic layer reduces the hydrogen gas concentration in the primary containment vessel by generating ammonia by reaction of hydrogen gas and nitrogen gas in the primary containment vessel. To increase the reaction velocity of ammonia composition, the ammonia composite catalytic layer is heated by a heater installed on the ammonia composite catalytic layer.

The gas treatment apparatus in the primary containment vessel described in Japanese Patent Laid-Open No. 58(1983)-168000 includes a recombiner connected to the primary containment vessel. A heater is installed on the recombiner. The hydrogen gas and oxygen gas in the primary containment vessel are supplied to the recombiner heated by the heater, and are combined in the recombiner to generate steam.

Japanese Patent Laid-open No. 2010-190868 describes a hydrogen treatment apparatus of the primary containment vessel. The hydrogen treatment apparatus includes a hydrogen gas occlusion device with a heater installed and the hydrogen gas occlusion device is connected to the primary containment vessel. The hydrogen gas supplied from the primary containment vessel is occluded into a hydrogen occlusion alloy in the hydrogen gas occlusion device. When discharging the hydrogen occluded in the hydrogen occlusion alloy, the hydrogen gas occlusion device is heated by the heater.

### [Citation List]

### [Patent Literature]

[Patent Literature 1] Japanese Patent Laid-Open No. 10 (1998) -227885
[Patent Literature 2] Japanese Patent Laid-open No. 2009-69122
[Patent Literature 3] Japanese Patent Laid-Open No. 11(1999)-30694
[Patent Literature 4] Japanese Patent Laid-open No. 2001-141868
[Patent Literature 5] Japanese Patent Laid-open No. 2006-322768
[Patent Literature 6] Japanese Patent Laid-Open No. 58 (1983) -168000
[Patent Literature 7] Japanese Patent Laid-open No. 2010-190868

JP2010190868 discloses a hydrogen treatment device for treating hydrogen gas generated in a reactor container. In the disclosed device, storage of hydrogen gas by a hydrogen gas storage device and discharge of the hydrogen gas from the hydrogen gas storage device are repeated by a controller, while detecting a treating capacity of the hydrogen gas storage device. In this case, since a large amount of hydrogen gas generated in the reactor container is treated in a batch system, resultantly reduction of the size and cost of the hydrogen gas storage device may be achieved

US2879146 discloses a gas recombiner for radiolytic hyrogen and oxygen.

US4246235 discloses a catalytic reactor for carrying out a catalytic reaction that comprises a horizontally disposed reaction zone. Foraminous retaining means are disposed within said reactor or reaction zone transversely thereof and occupying the complete cross-section of said reaction zone available for the flow of gaseous or vaporized reactants therethrough. The forminous retaining means define a transverse volume along a portion of the length of the reactor and are adapted to be filled with particle-form catalytic material. A chamber is disposed at the upper portion of and in open communication with said transverse volume. The chamber is adapted to be filled with particle-form catalytic material so as to maintain the transverse volume filled with particle-form catalytic material. The catalytic reactor is generally used for carrying out catalytic reactions involving gaseous or vaporized reactants and a mass of particle-form catalytic material.

In the aforementioned thermal hydrogen treatment equipment, passive autocatalytic treatment equipment, hydrogen permeable membrane hydrogen treatment equipment, ammonia composite catalytic hydrogen treatment equipment, and hydrogen occlusion alloy hydrogen treatment equipment, at the time of the loss of coolant accident, the hydrogen included in the high-temperature steam in the primary containment vessel must be treated by the gas treatment apparatus. In any of the treatment equipment, a large quantity of high-temperature steam is introduced into the gas treatment apparatus together with hydrogen and in the gas treatment apparatus, the steam is condensed and dew condensation is generated. Water droplets generated by the dew condensation cover a surface of the gas treatment catalyst in the gas treatment apparatus, so that a performance reduction of the gas treatment in the gas treatment apparatus and corrosion of the structure members of the gas treatment apparatus are generated.

Particularly, in the passive autocatalytic treatment equipment and ammonia composite catalytic hydrogen treatment equipment, the water droplets generated in the gas treatment apparatus due to the dew condensation promote catalyst poisoning due to radioactive iodine included in the high-temperature steam discharged from the reactor pressure vessel into the primary containment vessel at the time of the loss of coolant accident and there is a fear that the hydrogen treatment performance in the gas treatment apparatus may be reduced. Further, in the hydrogen permeable membrane hydrogen treatment equipment and hydrogen occlusion alloy hydrogen treatment equipment, the water droplets generated due to the dew condensation cover the surface of the hydrogen permeable membrane and the surface of the hydrogen occlusion alloy, so that there is a fear that the hydrogen treatment performance may be reduced.

It is an effective measure to heat the gas treatment apparatus by a heater in order to avoid the condensation of high-temperature steam in the gas treatment apparatus, though in the case of station blackout at the time of the loss of coolant accident, heating the gas treatment apparatus by the heater is impossible.

A preferred aim of the present invention is to provide a gas treatment equipment of a nuclear power plant, even in the case of station blackout, which may improve gas treatment efficiency in a primary containment vessel.

According to the present invention there is provided a gas treatment equipment according to claim 1.

According to the present invention there is also provided a gas treatment equipment according to claim 11.

Since the gas in the casing of the gas treatment apparatus is heated by the heat held by the gas, which includes the steam and gas components, supplied from the primary containment vessel, even in the case of the station blackout, the gas supplied from the primary containment vessel can be efficiently treated by the gas treatment apparatus and the gas treatment efficiency in the primary containment vessel can be improved.

### [Advantageous Effect of the Invention]

According to the present invention, even when the station blackout occurs, the treatment efficiency of gas in the primary containment vessel can be improved.
FIG. 1 is a structural diagram showing a gas treatment equipment of a nuclear power plant according to embodiment 1 which is a preferred embodiment of the present invention,
FIG. 2 is a structural diagram showing a gas treatment equipment of a nuclear power plant according to embodiment 2 which is another preferred embodiment of the present invention,
FIG. 3 is a structural diagram showing a gas treatment equipment of a nuclear power plant according to embodiment 3 which is other preferred embodiment of the present invention,
FIG. 4 is a structural diagram showing a gas treatment equipment of a nuclear power plant according to embodiment 4 which is other preferred embodiment of the present invention, and
FIG. 5 is a structural diagram showing a gas treatment equipment of a nuclear power plant according to embodiment 5 which is other preferred embodiment of the present invention.
FIG. 6 is a structural diagram showing a gas treatment equipment of a nuclear power plant according to embodiment 6 which is other preferred embodiment of the present invention.

The embodiments of the present invention will be explained below.

### [Embodiment 1]

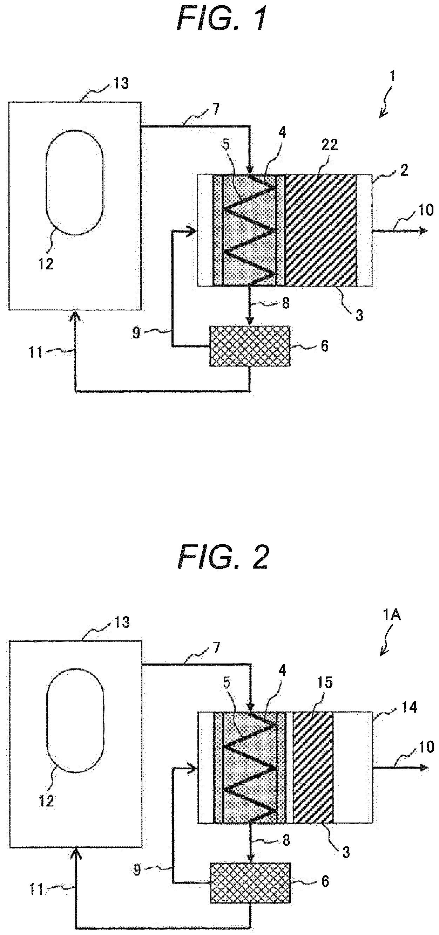

A gas treatment equipment of a nuclear power plant according to embodiment 1 which is a preferred embodiment of the present invention will be explained by referring to FIG. 1. The gas treatment equipment 1 of the nuclear power plant of the present embodiment is applied to a boiling water nuclear power plant.

The gas treatment equipment 1 is provided with a passive autocatalytic hydrogen treatment apparatus (a gas treatment apparatus) 2, a heat exchanger 4, and a mist separator 6. The passive autocatalytic hydrogen treatment apparatus 2 forms a catalytic layer (gas component treatment member) 22 filled with a catalyst for generating a combination reaction of hydrogen and oxygen in a casing 3. The heat exchanger 4 has heat exchanger tubes 5. The heat exchanger tubes 5 are disposed in a region (a heat exchanger tube arrangement region) on an upstream side of the catalytic layer 22 in the casing 3. The mist separator 6 is connected to a pipe 8 communicated to outlets of the heat exchanger tubes 5 and furthermore, by a pipe 9, it is connected to an end portion of the casing on an upstream side existing on an upstream side of the heat exchanger tube arrangement region in the casing 3. The pipe 9 is connected to a gas inlet formed at the end portion of the casing 3 on the upstream side. A gas discharge pipe 10 is connected to a gas outlet formed at an end portion of the casing 3 on a downstream side.

The boiling water nuclear power plant disposes a reactor pressure vessel 12 having a built-in core in a primary containment vessel 13. A drywell and a pressure suppression chamber separated from each other are formed in the primary containment vessel 13. The reactor pressure vessel 12 is disposed in the drywell. The passive autocatalytic treatment apparatus 2, the heat exchanger 4, and the mist separator 6 are disposed outside the primary containment vessel 13. A gas supply pipe 7 connected to the casing 3 of the passive autocatalytic treatment apparatus 2 and communicated with each inlet end of the heat exchanger tubes 5 is connected to the primary containment vessel 13 and is communicated with the drywell. A condensed water discharge pipe 11 connected to the mist separator 6 is connected to the primary containment vessel 13 and is communicated with the reactor power suppression chamber. When the boiling water nuclear power plant is in operation, nitrogen gas is filled in the primary containment vessel 13. As the mist separator 6, a mist separator of any one of a mesh type, waved plate type, fiber type, vane type, centrifix type, multicyclon type, and filter type is used.

When the boiling water nuclear power plant is in operation, if a pipe (for example, a main steam pipe) connected to the reactor pressure vessel is broken in the primary containment vessel 13, the high-temperature and high-pressure cooling water in the reactor pressure vessel 12 becomes high-temperature steam and is discharged from the broken portion of the main steam pipe into the drywell of the primary containment vessel 13. This steam is discharged from the drywell into cooling water of a pressure suppression pool which is formed in the pressure suppression chamber and is condensed by the cooling water. Therefore, the pressure rise in the primary containment vessel 13 is suppressed.

When the loss of coolant accident occurs and power is supplied from an outer power source which is an AC power source or an emergency generator to the boiling water nuclear power plant, an emergency core cooling apparatus is driven, and cooling water is injected into the core in the reactor pressure vessel 12 by the emergency core cooling apparatus, and the fuel assembly loaded in the core is cooled by the cooling water. When the loss of coolant accident occurs and the emergency core cooling apparatus is driven, the steam discharged from the broken portion of the main steam pipe into the drywell includes hydrogen gas and oxygen gas which are generated due to the radiation decomposition of the cooling water in the reactor pressure vessel 12.

When the loss of coolant accident occurs, if the outer power source and emergency diesel generator should become the station blackout state, no cooling water is injected into the reactor pressure vessel 12 and the water level in the reactor pressure vessel 12 lowers. The fuel rod included in the fuel assembly in the core is exposed from the cooling water and the nuclear fuel material in the fuel rod rises in temperature. As a result, in addition to the hydrogen gas generated due to the radiation decomposition of the cooling water, zirconium included in the fuel cladding for covering the nuclear fuel material of the fuel rod and steam react and generate a large quantity of hydrogen gas. This hydrogen gas is discharged from the reactor pressure vessel 12 into the drywell of the primary containment vessel 13 together with the hydrogen gas generated due to the radiation decomposition of the cooling water. If the aforementioned reaction of zirconium and steam occurs, the fission products existing in the fuel rod, for example, radioactive iodine, radioactive cesium, and radioactive noble gas (for example, radioactive krypton and radioactive xenon) etc. which are a radioactive nuclide, are discharged outside the fuel rod and furthermore, are discharged into the drywell together with the steam.

To treat the hydrogen gas discharged into the primary containment vessel 13, the high-temperature steam including hydrogen gas, oxygen gas, nitrogen gas, and a radioactive nuclide in the drywell is supplied into the heat exchanger tubes 5 of the heat exchanger 4 through the gas supply pipe 7. The high-temperature steam in the heat exchanger tubes 5 heats gas supplied to the casing 3, to be more specific, the heat exchanger tube arrangement region existing outside the heat exchanger tubes 5 in the casing 3 through the pipe 9 which will be described later. If the steam flowing through the heat exchanger tubes 5 lowers in temperature due to heating by the gas and lowers in pressure than the saturated steam pressure, it is condensed to many mists of fine water droplets. These fine mists have an action of adsorbing fine aerosol particles including a radioactive nuclide and radioactive iodine due to the surface tension. Most of radioactive nuclides included in the gas flowing through the heat exchanger tubes 5 are adsorbed to the mists and are removed. The gas including many mists adsorbing the radioactive nuclides, hydrogen gas, oxygen gas, and nitrogen gas is discharged from the heat exchanger tubes 5 into the pipe 8 and flows into the mist separator 6.

The mist separator 6 removes mists included in flowed-in gas. The removed mists become condensed water including radioactive nuclides and are discharged into the cooling water of the pressure suppression pool formed in the pressure suppression chamber in the primary containment vessel 13 through the condensed water discharge pipe 11. That is, most of radioactive nuclides included in the gas flowing through the heat exchanger tubes 5 are adsorbed to the mists and are discharged into the cooling water of the pressure suppression pool.

The gas from which the radioactive nuclides and mists were removed by the mist separator 6 is supplied to the casing 3 of the passive autocatalytic hydrogen treatment apparatus 2 through the pipe 9 and is heated by high-temperature steam flowing through the heat exchanger tubes 5 in the heat exchanger tube arrangement region in the casing 3. The temperature of the gas heated by the high-temperature steam rises up to the saturated temperature and the gas the temperature of which was risen flows into the catalytic layer 22 and raises the temperature of the catalytic layer 22. Therefore, the steam included in the gas in the casing 3 is not condensed and no water droplets are adhered on the catalyst surface within the catalytic layer 22. Most of the steam discharged into the gas supply pipe 7 from the primary containment vessel 13 is removed by the mist separator 6 as mists, so that the quantity of steam included in the gas supplied into the casing 3 from the pipe 9 is small. In the casing 3, the gas temperature rises, so that the small quantity of steam is not condensed in the casing 3 and the dew condensation does not occur on the surface of the catalytic layer 22.

The gas flowed into the casing 3 flows into the catalytic layer 22 in the casing 3. The hydrogen gas and oxygen gas included in the gas are combined by the catalytic action for producing a combination reaction of hydrogen and oxygen in the catalytic layer 22 and become steam. The gas including this steam is discharged from the catalytic layer 22 and furthermore, is discharged outside the system (outside environment) through the gas discharge pipe 10. When the quantity of hydrogen gas included in the gas is much larger than the quantity of oxygen gas, the quantity of oxygen gas included in the gas discharged from the primary containment vessel 13 is relatively smaller compared with the quantity of hydrogen gas, so that oxygen gas in a necessary quantity to the combination reaction with hydrogen gas is supplied into the casing 3, for example, from an oxygen cylinder (not drawn).

According to the present embodiment, at the time of the loss of coolant accident, the gas supplied to the casing 3 of the passive autocatalytic hydrogen treatment apparatus 2 from the pipe 9 is heated by using the high-temperature steam discharged into the primary containment vessel 13, so that the temperature of the gas rises up to the saturated temperature. Therefore, the steam included in the gas is not condensed in the casing 3 and produces no dew condensation, so that the combination reaction of hydrogen gas and oxygen gas by the catalytic layer 22, that is, the hydrogen gas treatment performance is improved. The hydrogen gas concentration in the primary containment vessel 13 is reduced more.

Further, the catalytic layer 22 is heated by the gas heated by the steam flowing through the heat exchanger tubes 5 and rises in temperature, so that the combination reaction of hydrogen gas and oxygen gas can be promoted. Therefore, the hydrogen gas treatment efficiency is improved.

In the present embodiment, the gas in the heat exchanger tube arrangement region in the casing 3 is heated by using the steam discharged into the primary containment vessel 13 at the time of the loss of coolant accident, so that even if the station blackout occurs at the time of the loss of coolant accident, the gas in the casing 3 can be heated. Therefore, even when the station blackout occurs at the time of the loss of coolant accident, in the passive autocatalytic hydrogen treatment apparatus 2, the treatment efficiency of the hydrogen gas supplied from the inside of the primary containment vessel 13 can be improved.

Since mists generated by condensation of the steam supplied to the heat exchanger tubes 5 to heat the casing 3 are removed by the mist separator 6, the radioactive nuclides included in the steam discharged from the primary containment vessel 13 are removed by the mist separator 6 together with mists. Therefore, dose of the gas flowing out from the mist separator 6 can be reduced to the allowable dose or less.

### [Embodiment 2]

A gas treatment equipment of a nuclear power plant according to embodiment 2 which is another preferred embodiment of the present invention will be explained by referring to FIG. 2. The gas treatment equipment 1A of the nuclear power plant of the present embodiment is applied to the boiling water nuclear power plant.

The gas treatment equipment 1A of the present embodiment has a structure that in the gas treatment equipment 1 of embodiment 1, the passive autocatalytic hydrogen processor 2 is replaced with a hydrogen permeable membrane hydrogen treatment apparatus (a gas treatment apparatus) 14. In the hydrogen permeable membrane hydrogen treatment apparatus 14, a hydrogen permeable membrane (gas component treatment member) 15 is installed on the downstream side of the region where the heat exchanger tubes 5 is arranged in the casing 3. The other structures of the gas treatment equipment 1A are similar to those of the gas treatment equipment 1.

When the loss of coolant accident occurs, if the outer power source and emergency diesel generator should become the station blackout state, as mentioned above, zirconium included in the fuel cladding of the fuel rod and the steam react and a large quantity of hydrogen gas is generated, and the fission products which are radioactive nuclides existing in the fuel rod are discharged outside the fuel rod. The fission products which are radioactive nuclides, steam, hydrogen gas, and oxygen gas which are discharged into the drywell from the broken portion of the main steam pipe are supplied into the heat exchanger tubes 5 of the heat exchanger 4 through the gas supply pipe 7. The high-temperature steam in the heat exchanger tubes 5, similarly to embodiment 1, heats the gas supplied into the casing 3. In the heat exchanger tubes 5, the steam is condensed to mists and the mists are removed by the mist separator 6 together with the radioactive nuclides.

The gas from which the radioactive nuclides and mists were removed is supplied into the casing 3 of the hydrogen permeable membrane hydrogen treatment apparatus 14 through the pipe 9. This gas is heated by the high-temperature steam flowing through the heat exchanger tubes 5 as aforementioned, and then reaches the hydrogen permeable membrane 15. The hydrogen gas included in the gas passes through the hydrogen permeable membrane 15, is discharged into the gas discharge pipe 10, and is discharged outside the system. The gas other than hydrogen gas and steam which are included in the gas flowing through the casing 3 through the pipe 9 cannot pass through the hydrogen permeable membrane 15.

In the present embodiment, similar to Example 1, the gas fed into the casing 3 is heated by the steam in the heat exchanger tubes 5 and rises in temperature, so that no dew condensation is produced in the casing 3 and onto the surface of the hydrogen permeable membrane 15, no waterdrops are adhered. Therefore, the quantity of hydrogen gas transmitting through the hydrogen permeable membrane 15 increases and the hydrogen gas treatment performance of the hydrogen permeable membrane hydrogen processor 14 improves. Even in the present embodiment, similar to Example 1, even when the station blackout occurs at the time of the loss of coolant accident, in the hydrogen permeable membrane hydrogen processor 14, the hydrogen gas treatment efficiency in the primary containment vessel 13 can be improved. Further, the radioactive nuclides included in the steam discharged from the primary containment vessel 13 are removed by the mist separator 6 together with mists.

### [Embodiment 3]

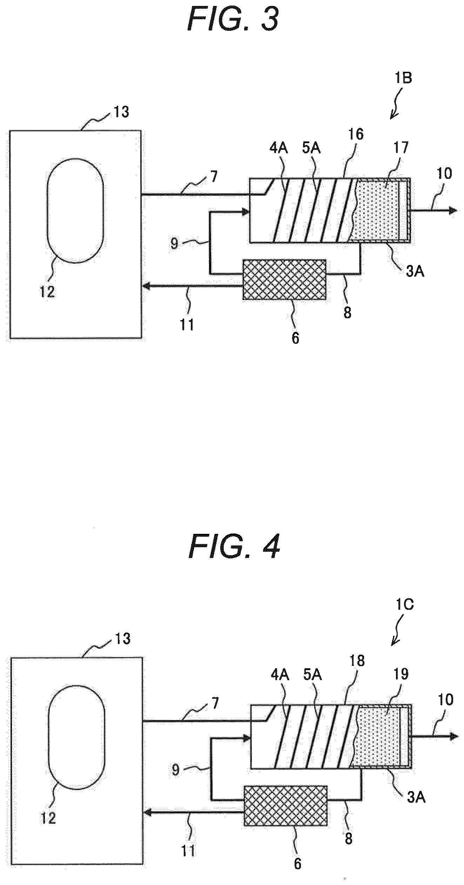

A gas treatment equipment of a nuclear power plant according to embodiment 3 which is other preferred embodiment of the present invention will be explained by referring to FIG. 3. The gas treatment equipment 1B of the nuclear power plant of the present embodiment is applied to the boiling water nuclear power plant.

The gas treatment equipment 1B of the present embodiment has a structure where in the gas treatment equipment 1 of embodiment 1, the passive autocatalytic hydrogen treatment apparatus 2 is replaced with an ammonia composite catalyst hydrogen treatment apparatus (a gas treatment apparatus) 16. In the ammonia composite catalyst hydrogen treatment apparatus 16, an ammonia composite catalytic layer (gas component treatment member) 17 is installed in a casing 3A where a heat exchanger tube (or heat exchanger tubes) 5A of a heat exchanger 4A is wound over the outside surface. The gas supply pipe 7 connected to the primary containment vessel 13 is connected to an inlet end of the heat exchanger tube 5A and the pipe 8 connected to the mist separator 6 is connected to an outlet end of the heat exchanger tube 5A. The ammonia composite catalytic layer 17 is filled with the ammonia composite catalyst. The other structures of the gas treatment equipment 1B are similar to those of the gas treatment equipment 1A.

When the loss of coolant accident occurs, if the outer power source and emergency diesel generator should become the station blackout state, as mentioned above, zirconium included in the fuel cladding of the fuel rod and the steam react and a large quantity of hydrogen gas is generated, and the fission products which are radioactive nuclides existing in the fuel rod are discharged outside the fuel rod. The fission products which are radioactive nuclides, steam, hydrogen gas, and oxygen gas which are discharged into the drywell from the broken portion of the main steam pipe and the nitrogen gas existing in the primary containment vessel are supplied into the heat exchanger tube 5A of the heat exchanger 4A through the gas supply pipe 7. The high-temperature steam in the heat exchanger tube 5A heats the casing 3A of the ammonia composite catalyst hydrogen treatment apparatus 16. The steam in the heat exchanger tubes 5A is condensed and mists are generated. The mists and radioactive nuclides included in the gas discharged from the heat exchanger tube 5A into the pipe 8 are removed by the mist separator 6.

The gas from which the radioactive nuclides and mists removed is supplied into the casing 3A of the ammonia composite catalyst hydrogen treatment apparatus 16 through the pipe 9. The casing 3A and the ammonia composite catalytic layer 17 in the casing 3A are heated by the high-temperature steam flowing through the heat exchanger tubes 5A wound over the outside surface of the casing 3A. The casing 3A is heated, thus the gas supplied to the casing 3A is also heated and the temperature of the gas rises up to the saturated temperature. This gas is supplied to the ammonia composite catalytic layer 17 in the casing 3A. The hydrogen gas and nitrogen gas included in the gas react on the action of the ammonia composite catalyst in the ammonia composite catalytic layer 17, and ammonia is generated. The gas including ammonia is discharged from the ammonia composite catalytic layer 17 and furthermore, is discharged outside the system through the gas discharge pipe 10.

In the present embodiment, the temperatures of the casing 3A and the ammonia composite catalytic layer 17 which are heated by the steam in the heat exchanger tubes 5A become higher than the temperature of the gas introduced into the casing 3A through the pipe 9. That is, in the casing 3A, the gas is heated by the quantity of heat added from the steam in the heat exchanger tubes 5A to the casing 3A and the gas temperature rises up to the saturated temperature.

The present embodiment can obtain each effect generated in embodiment 1.

### [Embodiment 4]

A gas treatment equipment of a nuclear power plant according to embodiment 4 which is other preferred embodiment of the present invention will be explained by referring to FIG. 4. The gas treatment equipment 1C of the nuclear power plant of the present embodiment is applied to the boiling water nuclear power plant.

The gas treatment equipment 1C of the present embodiment has a structure that in the gas treatment equipment 1 of embodiment 1, the passive autocatalytic hydrogen treatment apparatus 2 is replaced with an iodine adsorption apparatus (a gas treatment apparatus) 18. In the iodine adsorption apparatus 18, in the casing 3A where the heat exchanger tube 5A of the heat exchanger 4A is wound over the outside surface, an iodine adsorbent layer (gas component treatment member) 19 is installed. The gas supply pipe 7 connected to the primary containment vessel 13 is connected to an inlet end of the heat exchanger tube 5A and the pipe 8 connected to the mist separator 6 is connected to an outlet end of the heat exchanger tube 5A. The iodine adsorbent layer 19 is filled with an iodine adsorbent. The other structures of the gas treatment equipment 1C are the same as those of the gas treatment equipment 1.

When the loss of coolant accident occurs, if the outer power source and emergency diesel generator should become the station blackout state, as mentioned above, zirconium included in the fuel cladding of the fuel rod and the steam react and a large quantity of hydrogen gas is generated, and the fission products (for example, radioactive iodine) which are radioactive nuclides existing in the fuel rod, are discharged outside the fuel rod. The fission products which are radioactive nuclides, steam, hydrogen gas, and oxygen gas which are discharged into the drywell from the broken portion of the main steam pipe and the nitrogen gas existing in the primary containment vessel, are supplied into the heat exchanger tube 5A of the heat exchanger 4A through the gas feed pipe 7. The high-temperature steam in the heat exchanger tube 5A, similarly to embodiment 3, heats the casing 3A of the iodine adsorption apparatus 18. The mists and the radioactive nuclides (including radioactive iodine and radioactive rare gas) included in the gas discharged from the heat exchanger tube 5A into the pipe 8 are removed by the mist separator 6.

The gas from which the radioactive nuclides and mists were removed is introduced into the casing 3A of the iodine adsorption apparatus 18 through the pipe 9. A part of the radioactive iodine which cannot be removed by the mist separator 6 is introduced into the casing 3A through the pipe 9 together with the gas. This gas is supplied to the iodine adsorbent layer 19 in the casing 3A. The radioactive iodine included in the gas is adsorbed to the iodine adsorbent in the iodine adsorbent layer 19 and is removed. The gas passing through the iodine adsorbent layer 19 is discharged into the gas discharge pipe 10.

In the present embodiment, similar to embodiment 3, the temperatures of the casing 3A and the iodine adsorbent layer 19 which are heated by the steam in the heat exchanger tube 5A wound over the outside surface of the casing 3A become higher than the temperature of the gas introduced into the casing 3A through the pipe 9. Therefore, the temperature of the gas supplied into the casing 3A, that is, the temperature heated by the heat transferred from the casing 3A rises up to the saturated temperature and no dew condensation is produced in the casing 3A.

According to the present embodiment, at the time of the loss of coolant accident, the casing 3A is heated by using the high-temperature steam discharged from the primary containment vessel 13, so that as aforementioned, dew condensation in the casing 3A can be prevented. Thus, the adsorption performance of the radioactive iodine by the iodine adsorbent layer 19, that is, the radioactive iodine treatment performance is improved.

In the present embodiment, at the time of the loss of coolant accident, the casing 3A is heated by using the steam discharged into the primary containment vessel 13, thus the gas in the casing 3A is heated, so that at the time of the loss of coolant accident, even if the station blackout occurs, the gas in the casing 3A can be heated. Therefore, even when the station blackout occurs at the time of the loss of coolant accident, in the iodine adsorption apparatus 18, the treatment efficiency of the radioactive iodine introduced from the inside of the primary containment vessel 13 can be improved.

Since mists generated by condensation of the steam supplied into the heat exchanger tubes 5A to heat the casing 3A are removed by the mist separator 6, the radioactive iodine included in the steam discharged from the primary containment vessel 13 can be removed by the mist separator 6 together with the mists. Therefore, the quantity of radioactive iodine included in the gas introduced into the casing 3A from the mist separator 6 can be reduced. By doing this, the life span of the iodine adsorbent filled in the iodine adsorption apparatus 18 can be lengthened.

In the present embodiment, the iodine adsorption apparatus 18 is disposed on the downstream side of the mist separator 6, so that the concentration of the radioactive iodine included in the gas discharged into the outside environment thorough the gas discharge pipe 10 is reduced from the concentration of the radioactive iodine of the gas flowing through the gas discharge pipe 10 in each of embodiments 1 to 3. Therefore, in the present embodiment, the quantity of radioactive iodine discharged into the outside environment is reduced more.

In the present embodiment, the hydrogen gas discharged from the primary containment vessel 13 into the gas supply pipe 7 passes through the casing 3A of the iodine adsorption apparatus 18 and furthermore, is discharged into the outside environment through the gas discharge pipe 10. Since the gas discharge pipe 10 of the iodine adsorption apparatus 18 is connected to the inlet end of the heat exchanger tubes 5 or the heat exchanger tube 5A of any of the gas treatment equipment of embodiments 1 to 3 as described later, this hydrogen gas can be treated by the hydrogen treatment apparatus used in any of embodiments 1 to 3.

### [Embodiment 5]

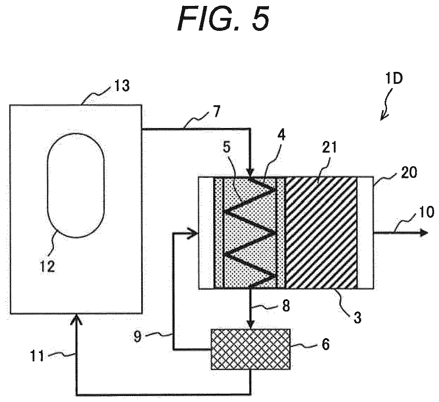

A gas treatment equipment of a nuclear power plant according to embodiment 5 which is other preferred embodiment of the present invention will be explained by referring to FIG. 5. The gas treatment equipment 1D of the nuclear power plant of the present embodiment is applied to the boiling water nuclear power plant.

The gas treatment equipment 1D of the present embodiment has a structure that in the gas treatment equipment 1 of embodiment 1, the passive autocatalytic hydrogen treatment apparatus 2 is replaced with a noble gas adsorption treatment apparatus (gas treatment apparatus) 20. In the noble gas adsorption treatment apparatus 20, a noble gas adsorbent layer (gas component treatment member) 21 filled with a noble gas adsorbent is installed on the downstream side of the region where the heat exchanger tubes 5 is disposed in the casing 3. The other structures of the gas treatment equipment 1D are the same as those of the gas treatment equipment 1.

When the loss of coolant accident occurs, if the outer power source and emergency diesel generator should become the station blackout state, as mentioned above, zirconium included in the fuel cladding of the fuel rod and steam react and a large quantity of hydrogen gas is generated, and the fission products (radioactive iodine, radioactive rare gas, etc.) which are radioactive nuclides existing in the fuel rod are discharged outside the fuel rod. The fission products which are radioactive nuclides, steam, hydrogen gas, and oxygen gas which are discharged into the drywell from the broken portion of the main steam pipe are supplied into the heat exchanger tubes 5 of the heat exchanger 4 through the gas supply pipe 7. The high-temperature steam in the heat exchanger tubes 5, similar to embodiment 1, heats the gas supplied into the casing 3. The steam is condensed to mists in the heat exchanger tubes 5 and the mists are removed by the mist separator 6 together with the radioactive nuclides (including radioactive iodine and radioactive rare gas) .

The gas from which the radioactive nuclides and mists were removed is introduced into the casing 3 of the noble gas adsorption treatment apparatus 20 through the pipe 9. This gas includes radioactive noble gas (for example, radioactive xenon and radioactive krypton) which cannot be removed by the mist separator 6. This gas, as aforementioned, is heated by the high-temperature steam flowing through the heat exchanger tubes 5 and then reaches the inside of the noble gas adsorbent layer 21. The radioactive noble gas included in the gas is adsorbed to the noble gas adsorbent in the noble gas adsorbent layer 21 and is removed. The gas passing through the noble gas adsorbent layer 21 is discharged into the gas discharge pipe 10 and is discharged outside the system.

In the present embodiment, similarly to embodiment 1, the gas supplied into the casing 3 through the pipe 9 is heated by the steam in the heat exchanger tubes 5 and rises in temperature, so that no dew condensation is produced in the casing 3. Therefore, the adsorption performance of the radioactive rare gas by the rare gas adsorbent layer 21 in the casing 3, that is, the treatment performance of the radioactive rare gas is improved.

In the present embodiment, the gas in the heat exchanger tube arrangement region in the casing 3 is heated by using the steam generated due to the loss of coolant accident, so that at the time of the loss of coolant accident, even if the station blackout occurs, the gas in the casing 3 can be heated. Therefore, even when the station blackout occurs at the time of the loss of coolant accident, in the noble gas adsorption treatment apparatus 20, the treatment efficiency of the radioactive noble gas introduce from the inside of the primary containment vessel 13 can be improved.

Since mists generated by condensation of the steam supplied into the heat exchanger tubes 5 to heat the gas in the casing 3 are removed by the mist separator 6, so that the radioactive noble gas included in the steam discharged from the primary containment vessel 13 can be removed by the mist separator 6 together with the mists. Therefore, the quantity of radioactive noble gas included in the gas introduced into the casing 3 from the mist separator 6 can be reduced. By doing this, the life span of the noble gas adsorbent filled in the noble gas adsorption processor 20 can be lengthened.

In the present embodiment, the noble gas adsorption treatment apparatus 20 is disposed on the downstream side of the mist separator 6, so that the concentration of the radioactive noble gas included in the gas discharged into the outside environment through the gas discharge pipe 10 is reduced from the concentration of the radioactive noble gas of the gas flowing through the gas discharge pipe 10 in each of embodiments 1 to 3. Therefore, in the present embodiment, the quantity of radioactive noble gas discharged into the outside environment is reduced more.

In the present embodiment, the hydrogen gas discharged from the primary containment vessel 13 into the gas supply pipe 7 passes through the casing 3A of the noble gas adsorption treatment apparatus 20 and furthermore, is discharged into the outside environment through the gas discharge pipe 10. Since the gas discharge pipe 10 of the noble gas adsorption treatment apparatus 20 is connected to the inlet end of the heat exchanger tubes 5 or the heat exchanger tube 5A of any gas treatment equipment of embodiments 1 to 3 as described later, this hydrogen gas can be treated by the hydrogen treatment apparatus used in any of embodiments 1 to 3.

### [Embodiment 6]

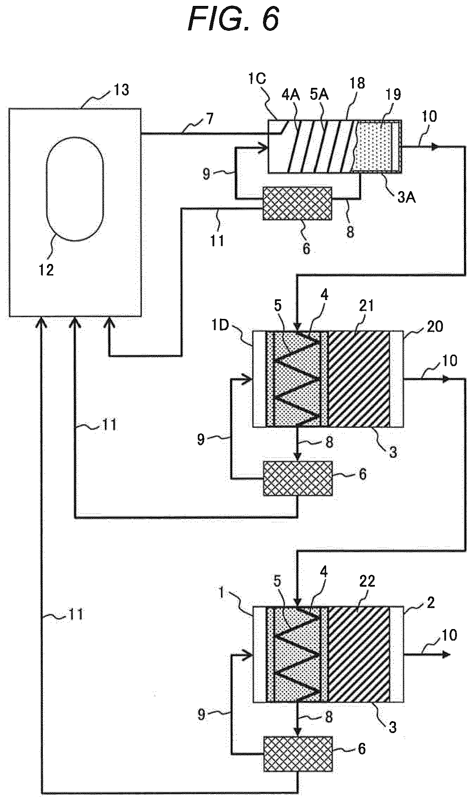

A gas treatment equipment of a nuclear power plant according to embodiment 6 which is other preferred embodiment of the present invention will be explained by referring to FIG. 6. The gas treatment equipment 1E of the nuclear power plant of the present embodiment is also applied to the boiling water nuclear power plant.

The gas treatment equipment 1E of the nuclear power plant of the present embodiment has the gas treatment equipment 1 of embodiment 1, the gas treatment equipment 1C of embodiment 4, and the gas treatment equipment 1D of embodiment 5.

The gas treatment equipment 1C having the iodine adsorption apparatus 18 is connected to the primary containment vessel 13 with the gas supply pipe 7 and the condensed water discharge pipe 11 as shown in FIG. 3. The gas discharge pipe 10 of the gas treatment equipment 1C is connected to the inlet end of the heat exchanger tubes 5 disposed in the casing 3 installed in the noble gas adsorption treatment apparatus 20 of the gas treatment equipment 1D. The condensed water discharge pipe 11 connected to the mist separator 6 of the gas treatment equipment 1D is connected to the primary containment vessel 13 and is communicated with the pressure suppression pool. The gas discharge pipe 10 of the gas treatment equipment 1D is connected to the inlet end of the heat exchanger tubes 5 disposed in the casing 3 installed in the passive autocatalytic hydrogen treatment apparatus 2 of the gas treatment equipment 1. The condensed water discharge pipe 11 connected to the mist separator 6 of the gas treatment equipment 1 is connected to the primary containment vessel 13 and is communicated with the pressure suppression pool.

When the loss of coolant accident occurs, if the outer power source and emergency diesel generator should become the station blackout state, the steam, hydrogen gas, oxygen gas, and radioactive nuclides (including radioactive iodine and radioactive noble gas) which are discharged into the drywell of the primary containment vessel 13 from the broken portion of the main steam pipe connected to the reactor pressure vessel 12 and the nitrogen gas filled in the primary containment vessel 13, are supplied into the heat exchanger tubes 5A wound over the casing 3A of the iodine adsorption apparatus 18 of the gas treatment equipment 1C through the gas supply pipe 7. The casing 3A is heated by the high-temperature steam in the heat exchanger tubes 5A. The radioactive iodine and radioactive noble gas included in the gas discharged from the heat exchanger tubes 5A are removed by the mist separator 6 of the gas treatment equipment 1C together with the mists generated in the heat exchanger tubes 5A and are discharged into the pressure suppression pool through the condensed water discharge pipe 11 connected to the mist separator 6 of the gas treatment equipment 1C.

The gas including the hydrogen gas, oxygen gas, radioactive iodine and radioactive noble gas which are not removed by the mist separator 6, and steam uncondensed in the heat exchanger tubes 5A is supplied into the casing 3A of the iodine adsorption apparatus 18, is heated by heating from the casing 3A heated by the gas including the high-temperature steam in the heat exchanger tubes 5A, and rises in temperature. The radioactive iodine included in this gas is adsorbed to the iodine adsorbent layer 19 and is removed.

The gas discharged from the iodine adsorbent layer 19 into the gas discharge pipe 10 connected to the iodine adsorption apparatus 18 is supplied into the heat exchanger tubes 5 disposed in the casing 3 installed in the noble gas adsorption treatment apparatus 20 of the gas treatment equipment 1D. The gas in the heat exchanger tubes 5 heats the gas supplied from the mist separator 6 of the gas treatment equipment 1D into the casing 3 through the pipe 9, so that the temperature of the gas in the heat exchanger tubes 5 reduces, and the steam included in the gas is condensed, thus mists are generated. In the mist separator 6 of the gas treatment equipment 1D, the radioactive nuclides included in the gas discharged from the heat exchanger tubes 5 are removed together with mists. The removed mists and radioactive nuclides are discharged into the pressure suppression pool through the condensed water discharge pipe 11 connected to the mist separator 6 of the gas treatment equipment 1D.

The gas including the hydrogen gas, oxygen gas, radioactive nuclides such as radioactive noble gas which are not removed by the mist separator 6 of the gas treatment equipment 1D, and steam uncondensed in the heat exchanger tubes 5 of the gas treatment equipment 1D is supplied into the casing 3 of the noble gas adsorption treatment apparatus 20, is heated by the gas including the high-temperature steam in the heat exchanger tubes 5 of the gas treatment equipment 1D, and rises in temperature. The radioactive noble gas included in this gas is adsorbed to the noble gas adsorbent layer 21 and is removed.

The gas discharged from the rare gas adsorbent layer 21 into the gas discharge pipe 10 connected to the rare gas adsorption treatment apparatus 20 is supplied into the heat exchanger tubes 5 disposed in the casing 3 installed in the passive autocatalytic hydrogen treatment equipment 2. The gas in the heat exchanger tubes 5 heats the gas supplied from the mist separator 6 of the gas treatment equipment 1 into the casing 3 through the pipe 9, so that the temperature of the gas in the heat exchanger tubes 5 is reduced, and the steam included in the gas is condensed, and mists are generated. In the mist separator 6 of the gas treatment equipment 1, the radioactive nuclides included in the gas discharged from the heat exchanger tubes 5 are removed together with mists. The removed mists and radioactive nuclides are discharged into the pressure suppression pool through the condensed water discharge pipe 11 connected to the mist separator 6 of the gas treatment equipment 1.

The gas including hydrogen gas and oxygen gas is supplied into the casing 3 of the passive autocatalytic hydrogen treatment apparatus 2, is heated by the high-temperature gas flowing through the heat exchanger tubes 5, and then is introduced into the catalytic layer 22. The hydrogen gas and oxygen gas, similar to embodiment 1, are combined by the action of the catalyst filled in the catalytic layer 22 and become steam. The gas (nitrogen gas) including this steam is discharged into the gas discharge pipe 10 connected to the passive autocatalytic hydrogen treatment apparatus 2 and is discharged into the outside environment.

The present embodiment can obtain each effect generated in embodiments 1, 4, and 5.

In the present embodiment, in place of the gas treatment equipment 1, either of the gas treatment equipment 1A of embodiment 2 and the gas treatment equipment 1B of embodiment 3 may be used.

In embodiment 6, instead of the three gas treatment equipments of the gas treatment equipment 1, the gas treatment equipment 1C, and the gas treatment equipment 1D, the two gas treatment equipments of the gas treatment equipment 1 and the gas treatment equipment 1C may be connected. In this case, the gas discharge pipe 10 connected to the gas treatment equipment 1C connected to the primary containment vessel 13 may be connected to the inlet end of the heat exchanger tubes 5 of the gas treatment equipment 1.

The heat exchanger 4 used in treatment equipment 1 may be installed in the casing 3A for embodiments 3 and 4. Further, the heat exchanger 4A used in embodiment 3 may be installed in the casing 3 for embodiments 1, 2, and 5.

The respective gas treatment equipments of embodiments 1 to 6 can be applied to the primary containment vessel of a pressurized water nuclear power plant.

### [REFERENCE SIGNS LIST]

1, 1A, 1B, 1C, 1D, 1E : gas treatment equipment, 2 : passive autocatalytic hydrogen treatment apparatus, 3, 3A : casing, 4, 4A : heat exchanger, 5, 5A : heat exchanger tube, 6 : mist separator, 7 : gas supply pipe, 10 : gas discharge pipe, 11 : condensed water discharge pipe, 12 : reactor pressure vessel, 13 : primary containment vessel, 14 : hydrogen permeable membrane hydrogen treatment apparatus, 15 : hydrogen permeable membrane, 16 : ammonia composite catalyst hydrogen treatment apparatus, 17 : ammonia composite catalytic layer, 18 : iodine adsorption apparatus, 19 : iodine adsorbent layer, 20 : noble gas adsorption treatment apparatus, 21 : noble gas adsorbent layer, 22 : catalytic layer.

## Claims

1. A gas treatment equipment (1, 1A-1E) for a nuclear power plant, the nuclear power plant comprising a primary containment vessel (13), the gas treatment equipment (1, 1A-1E) comprising:
a gas treatment apparatus (2, 14, 16, 18, 20) for treating gas components included in gas supplied from the primary containment vessel (13) of the nuclear power plant; and
a mist separator (6),
wherein said gas treatment apparatus (2, 14, 16, 18, 20) includes a casing (3, 3A) and a gas component treatment member (22, 15, 17, 19, 21) installed in said casing (3, 3A) for treating said gas components;
wherein a heat exchanger (4, 4A) is installed in said casing (3, 3A), the heat exchanger (4, 4A) being arranged to heat gas in the casing (3, 3A) being supplied to the gas component treatment member (22, 15, 17, 19, 21), wherein the heat exchanger (4, 4A) is arranged to heat the gas in the casing (3, 3A) by heat exchange from a gas, which includes steam and said gas components, supplied to the heat exchanger (4, 4A) from a primary containment vessel (13) of a nuclear power plant, to the gas in said casing (3, 3A);
wherein said mist separator (6) is connected to said heat exchanger (4, 4A) and is arranged to remove mists that are generated in said heat exchanger (4, 4A) by condensation of said steam in said gas supplied from the primary containment vessel (13) of the nuclear power plant, together with a part of said gas components adsorbed to said mists; and
wherein a pipe path (9) is provided between said mist separator (6) and said casing (3, 3A) for introducing said gas supplied from the primary containment vessel (13) of the nuclear power plant including said gas components not removed by said mist separator (6), which is output from said mist separator (6), into said casing (3, 3A) to be supplied to the gas component treatment member (22, 15, 17, 19, 21).

2. The gas treatment equipment (1, 1A-1E) according to claim 1, wherein said heat exchanger (4, 4A) is disposed on an upstream side of said gas component treatment member (22, 15, 17, 19, 21) in said casing (3, 3A).

3. The gas treatment equipment (1B, 1C) according to claim 1, wherein said heat exchanger (4A) is installed on an outside surface of said casing (3A).

4. The gas treatment equipment (1, 1A-1E) according to any one of claims 1 to 3, comprising:
a mist discharge pipe path (11) for introducing said mists separated by said mist separator (6) for adsorbing said gas components into said primary containment vessel (13).

5. The gas treatment equipment (1, 1A-1E) according to any one of claims 1 to 3, wherein said gas treatment apparatus (2, 14, 16, 18, 20) is any of a passive autocatalytic hydrogen treatment apparatus (2), a hydrogen permeable membrane hydrogen treatment apparatus (14), an ammonia composite catalytic hydrogen treatment apparatus (16), an iodine adsorption apparatus (18), and a noble gas adsorption treatment apparatus (20).

6. The gas treatment equipment (1) according to claim 5, wherein:
said gas treatment apparatus (2) is a passive autocatalytic hydrogen treatment apparatus (2); and
said gas component treatment member (22) installed in said casing (3) of said passive autocatalytic hydrogen treatment apparatus (2) is a catalytic layer (22) for combining oxygen, and hydrogen which is said gas component.

7. The gas treatment equipment (1A) according to claim 5, wherein:
said gas treatment apparatus (14) is a hydrogen permeable membrane hydrogen treatment apparatus (14); and
said gas component treatment member (15) installed in said casing (3) of said hydrogen permeable membrane hydrogen treatment apparatus (14) is a hydrogen permeable membrane (15).

8. The gas treatment equipment (1B) according to claim 5, wherein:
said gas treatment apparatus (16) is an ammonia composite catalytic hydrogen treatment apparatus (16); and
said gas component treatment member (17) installed in said casing (3A) of said ammonia composite catalytic hydrogen treatment apparatus (16) is a catalytic layer (17) for permitting hydrogen and nitrogen to be said gas components to react and compose ammonia.

9. The gas treatment equipment (1C) according to claim 5, wherein said gas treatment apparatus (18) is an iodine adsorption apparatus (18); and
said gas component treatment member (19) installed in said casing (3A) of said iodine adsorption apparatus (18) is an iodine adsorbent layer (19).

10. The gas treatment equipment (1D) according to claim 5, wherein:
said gas treatment apparatus (20) is a noble gas adsorption treatment apparatus (20); and
said gas component treatment member (21) installed in said casing (3) of said noble gas adsorption treatment apparatus (20) is a noble gas adsorbent layer (21) .

11. A gas treatment equipment for a nuclear power plant, the gas treatment equipment comprising:
the gas treatment equipment (1, 1A-1E) according to claim 1, and a second gas treatment equipment (1, 1A-1E),
wherein said second gas treatment equipment (1, 1A-1E) includes a second gas treatment apparatus (2, 14, 16, 18, 20) for treating other gas components included in said gas passing through said gas component treatment member (22, 15, 17, 19, 21) of said gas treatment equipment (1, 1A-1E) according to claim 1, and a second mist separator (6);
wherein said second gas treatment apparatus (2, 14, 16, 18, 20) includes a second casing (3, 3A) and a second gas component treatment member (22, 15, 17, 19, 21) installed in said second casing (3, 3A) for treating said other gas components;
wherein a second heat exchanger (4, 4A) is installed in said second casing (3, 3A), the second heat exchanger (4, 4A) being arranged to heat gas in the second casing (3, 3A) being supplied to the second gas component treatment member (22, 15, 17, 19, 21), wherein the second heat exchanger (4, 4A) is arranged to heat the gas in the second casing (3, 3A) by heat exchange from a gas, which includes steam and said other gas components, supplied to the second heat exchanger (4, 4A) from said gas treatment equipment (1, 1A-1E) according to claim 1, to the gas in the second casing (3, 3A) ;
wherein said second mist separator (6) is connected to said second heat exchanger (4, 4A) and is arranged to remove mists that are generated in said second heat exchanger (4, 4A) by condensation of said steam in said gas supplied from the gas treatment equipment (1, 1A-1E) according to claim 1, together with a part of said other gas components adsorbed to said mists, and
wherein a second pipe path (9) is provided between said second mist separator (6) and said second casing (3, 3A) for introducing said gas supplied from the gas treatment according to claim 1 including said other gas components not removed by said second mist separator (6), which is output from said second mist separator (6), into said second casing (3, 3A) to be supplied to the second gas component treatment member (22, 15, 17, 19, 21).

12. The gas treatment equipment according to claim 11, wherein said second component treatment member (22) is a catalytic layer (22) for combining oxygen and hydrogen which is another gas component.

13. The gas treatment equipment according to claim 12, wherein said component treatment member of said gas treatment equipment (1C) according to claim 1 is an iodine adsorbent layer (19) for removing radioactive iodine (19) which is said gas component.

## Patentansprüche

1. Gasbehandlungseinrichtung (1, 1A-1E) für ein Kernkraftwerk, wobei das Kernkraftwert einen primären Sicherheitsbehälter (13) umfasst,
wobei die Gasbehandlungseinrichtung (1, 1A-1E) Folgendes umfasst:
eine Gasbehandlungsvorrichtung (2, 14, 16, 18, 20) zur Behandlung von Gasbestandteilen, die in einem Gas beinhaltet sind, das vom primären Sicherheitsbehälter (13) des Kernkraftwerks zugeführt wird; und
einen Nebelabscheider (6),
wobei die Gasbehandlungsvorrichtung (2, 14, 16, 18, 20) ein Gehäuse (3, 3A) und ein Gasbestandteil-Behandlungselement (22, 15, 17, 19, 21) beinhaltet, das in dem Gehäuse (3, 3A) zur Behandlung der Gasbestandteile befestigt ist;
wobei ein Wärmetauscher (4, 4A) in dem Gehäuse (3, 3A) befestigt ist, wobei der Wärmetauscher (4, 4A) angeordnet ist, um Gas in dem Gehäuse (3, 3A) zu erhitzen, das dem Gasbestandteil-Behandlungselement (22, 15, 17, 19, 21) zugeführt wird, wobei der Wärmetauscher (4, 4A) angeordnet ist, um das Gas in dem Gehäuse (3, 3A) durch Wärmeaustausch von einem Gas, das Dampf und die Gasbestandteile beinhaltet und dem Wärmetauscher (4, 4A) von einem primären Sicherheitsbehälter (13) eines Kernkraftwerks zugeführt wird, zu dem Gas in dem Gehäuse (3, 3A) zu erhitzen;
wobei der Nebelabscheider (6) mit dem Wärmetauscher (4, 4A) verbunden und angeordnet ist, um Nebel, die in dem Wärmetauscher (4, 4A) durch Kondensation des Dampfes in dem Gas, das vom primären Sicherheitsbehälter (13) des Kernkraftwerks zugeführt wird, erzeugt werden, gemeinsam mit einem Teil der an den Nebeln adsorbierten Gasbestandteile zu entfernen; und
wobei ein Rohrpfad (9) zwischen dem Nebelabscheider (6) und dem Gehäuse (3, 3A) bereitgestellt ist, um das vom primären Sicherheitsbehälter (13) des Kernkraftwerks zugeführte Gas, das die Gasbestandteile beinhaltet, die nicht vom Nebelabscheider (6) entfernt wurden, und das aus dem Nebelabscheider (6) abgeleitet wird, in das Gehäuse (3, 3A) einzuleiten, um es dem Gasbestandteil-Behandlungselement (22, 15, 17, 19, 21) zuzuführen.

2. Gasbehandlungseinrichtung (1, 1A-1E) nach Anspruch 1, wobei der Wärmetauscher (4, 4A) auf einer stromauf gelegenen Seite des Gasbestandteil-Behandlungselements (22, 15, 17, 19, 21) in dem Gehäuse (3, 3A) angeordnet ist

3. Gasbehandlungseinrichtung (1, 1A-1E) nach Anspruch 1, wobei der Wärmetauscher (4A) auf einer Außenfläche des Gehäuses (3A) befestigt ist.

4. Gasbehandlungseinrichtung (1, 1A-1E) nach einem der Ansprüche 1 bis 3, umfassend:
einen Nebelabfuhr-Rohrpfad (11) zum Einbringen der durch den Nebelabscheider (6) abgeschiedenen Nebel, um die Gasbestandteile in den primären Sicherheitsbehälter (13) zu adsorbieren.

5. Gasbehandlungseinrichtung (1, 1A-1E) nach einem der Ansprüche 1 bis 3, wobei die Gasbehandlungsvorrichtung (2, 14, 16, 18, 20) eine beliebige aus einer passiven autokatalytischen Wasserstoffbehandlungsvorrichtung (2), einer Wasserstoffbehandlungsvorrichtung mit wasserstoffdurchlässiger Membran (14), einer Wasserstoffbehandlungsvorrichtung durch Katalyse einer Ammoniak-Verbindung (16), einer lodadsorptionsvorrichtung (18) und einer Edelgasadsorption-Behandlungsvorrichtung (20) ist.

6. Gasbehandlungseinrichtung (1) nach Anspruch 5, wobei:
die Gasbehandlungsvorrichtung (2) eine passive autokatalytische Wasserstoffbehandlungsvorrichtung (2) ist; und
das in dem Gehäuse (3) der passiven autokatalytischen Wasserstoffbehandlungsvorrichtung (2) angebrachte Gasbestandteil-Behandlungselement (22) eine katalytische Schicht (22) ist, um Sauerstoff und Wasserstoff, welcher der Gasbestandteil ist, zu kombinieren.

7. Gasbehandlungseinrichtung (1A) nach Anspruch 5, wobei:
die Gasbehandlungsvorrichtung (14) eine Wasserstoffbehandlungsvorrichtung mit wasserstoffdurchlässiger Membran (14) ist und
das in dem Gehäuse (1) der Wasserstoffbehandlungsvorrichtung mit wasserstoffdurchlässiger Membran (14) angebrachte Gasbestandteil-Behandlungselement (15) eine wasserstoffdurchlässige Membran (15) ist.

8. Gasbehandlungseinrichtung (1B) nach Anspruch 5, wobei
die Gasbehandlungsvorrichtung (16) eine Wasserstoffbehandlungsvorrichtung durch Katalyse einer Ammoniak-Verbindung (16) ist, und
das Gasbestandteil-Behandlungselement (17), das in dem Gehäuse (3A) der Wasserstoffbehandlungsvorrichtung durch Katalyse einer Ammoniak-Verbindung (16) befestigt ist, eine katalytische Schicht (17) ist, um zu ermöglichen, dass Wasserstoff und Stickstoff die Gasbestandteile sind, um zu reagieren und Ammoniak zu bilden.

9. Gasbehandlungseinrichtung (1C) nach Anspruch 5, wobei
die Gasbehandlungsvorrichtung (18) eine lodadsorptionsvorrichtung (18) ist, und
das in dem Gehäuse (3A) der lodadsorptionsvorrichtung (18) angebrachte Gasbestandteil-Behandlungselement (19) eine iodadsorbierende Schicht (19) ist.

10. Gasbehandlungseinrichtung (1D) nach Anspruch 5, wobei
die Gasbehandlungsvorrichtung (20) eine Edelgasadsorption-Behandlungsvorrichtung (20) ist, und
das in dem Gehäuse (3) der Edelgasadsorption-Behandlungsvorrichtung (20) angebrachte Gasbestandteil-Behandlungselement (21) eine edelgasadsorbierende Schicht (21) ist.

11. Gasbehandlungseinrichtung für ein Kernkraftwerk, wobei die Gasbehandlungseinrichtung Folgendes umfasst:
die Gasbehandlungseinrichtung (1, 1A-1E) nach Anspruch 1 sowie eine zweite Gasbehandlungseinrichtung (1, 1A-1E);
wobei die zweite Gasbehandlungseinrichtung (1, 1A-1E) eine zweite Gasbehandlungsvorrichtung (2, 14, 16, 18, 20) zur Behandlung anderer Gasbestandteile, die in dem Gas beinhaltet sind, das durch das Gasbestandteil-Behandlungselement (22, 15, 17, 19, 21) der Gasbehandlungseinrichtung (1, 1A-1E) nach Anspruch 1 strömt, sowie einen zweiten Nebelabscheider (6) beinhaltet;
wobei die zweite Gasbehandlungsvorrichtung (2, 14, 16, 18, 20) ein zweites Gehäuse (3, 3A) und ein zweites, in dem zweiten Gehäuse (3, 3A) befestigtes Gasbestandteil-Behandlungselement (22, 15, 17, 19, 21) zur Behandlung der anderen Gasbestandteile beinhaltet;
wobei ein zweiter Wärmetauscher (4, 4A) in dem zweiten Gehäuse (4, 4A) befestigt ist, wobei der zweite Wärmetauscher (4, 4A) angeordnet ist, um Gas in dem zweiten Gehäuse (3, 3A) zu erhitzen, das dem zweiten Gasbestandteil-Behandlungselement (22, 15, 17, 19, 21) zugeführt wird, wobei der zweite Wärmetauscher (4, 4A) angeordnet ist, um das Gas in dem zweiten Gehäuse (3, 3A) durch Wärmeaustausch von einem Gas, das Dampf und die anderen Gasbestandteile beinhaltet und dem zweiten Wärmetauscher (4, 4A) von der Gasbehandlungseinrichtung (1, 1A-1E) nach Anspruch 1 zugeführt wird, zu dem Gas in dem zweiten Gehäuse (3, 3A) zu erhitzen;
wobei der zweite Nebelabscheider (6) mit dem zweiten Wärmetauscher (4, 4A) verbunden und angeordnet ist, um Nebel, die in dem zweiten Wärmetauscher (4, 4A) durch Kondensation des Dampfes in dem Gas, das von der Gasbehandlungseinrichtung (1, 1A-1E) zugeführt wird, erzeugt werden, gemeinsam mit einem Teil der anderen, an den Nebeln adsorbierten Gasbestandteile zu entfernen, und
wobei ein zweiter Rohrpfad (9) zwischen dem zweiten Nebelabscheider (6) und dem zweiten Gehäuse (3, 3A) bereitgestellt ist, um das von der Gasbehandlungseinrichtung nach Anspruch 1 zugeführte Gas, das die anderen Gasbestandteile beinhaltet, die nicht durch den zweiten Nebelabscheider (6) entfernt wurden, und das aus dem zweiten Nebelabscheider (6) abgeleitet wird, in das zweite Gehäuse (3, 3A) einzuleiten, um es dem zweiten Gasbestandteil-Behandlungselement (22, 15, 17, 19, 21) zuzuführen.

12. Gasbehandlungseinrichtung nach Anspruch 11, wobei das zweite Bestandteil-Behandlungselement (22) eine katalytische Schicht (22) ist, um Sauerstoff und Wasserstoff, welcher ein weiterer Gasbestandteil ist, zu kombinieren.

13. Gasbehandlungseinrichtung nach Anspruch 12, wobei das Bestandteil-Behandlungselement der Gasbehandlungseinrichtung (1C) nach Anspruch 1 eine iodabsorbierende Schicht (19) ist, um radioaktives Iod (19) zu entfernen, welches der Gasbestandteil ist.

## Revendications

1. Équipement de traitement de gaz (1, 1A-1E) pour une centrale nucléaire, la centrale nucléaire comprenant une cuve de confinement primaire (13), l'équipement de traitement de gaz (1, 1A-1E) comprenant :
un appareil de traitement de gaz (2, 14, 16, 18, 20) pour traiter des composants gazeux inclus dans un gaz distribué depuis la cuve de confinement primaire (13) de la centrale nucléaire ; et
un séparateur de gouttelettes d'eau (6),
dans lequel ledit appareil de traitement de gaz (2, 14, 16, 18, 20) comprend un boîtier (3, 3A) et un élément de traitement de composant gazeux (22, 15, 17, 19, 21) installé dans ledit boîtier (3, 3A) pour traiter lesdits composants gazeux ;
dans lequel un échangeur de chaleur (4, 4A) est installé dans ledit boîtier (3, 3A), l'échangeur de chaleur (4, 4A) étant agencé pour chauffer le gaz dans le boîtier (3, 3A) étant distribué vers l'élément de traitement de composant gazeux (22, 15, 17, 19, 21), l'échangeur de chaleur (4, 4A) étant agencé pour chauffer le gaz dans le boîtier (3, 3A) par échange de chaleur d'un gaz, qui comprend de la vapeur d'eau et lesdits composants gazeux, distribués vers l'échangeur de chaleur (4, 4A) depuis une cuve de confinement primaire (13) d'une centrale nucléaire, avec le gaz dans ledit boîtier (3, 3A) ;
dans lequel ledit séparateur de gouttelettes d'eau (6) est raccordé audit échangeur de chaleur (4, 4A) et est agencé pour éliminer les gouttelettes d'eau qui sont générées dans ledit échangeur de chaleur (4, 4A) par condensation de ladite vapeur d'eau dans ledit gaz distribué depuis la cuve de confinement primaire (13) de la centrale nucléaire, conjointement avec une partie desdits composants gazeux adsorbés sur lesdites gouttelettes d'eau ; et
dans lequel un trajet de tuyau (9) est disposé entre ledit séparateur de gouttelettes d'eau (6) et ledit boîtier (3, 3A) pour introduire ledit gaz distribué depuis la cuve de confinement primaire (13) de la centrale nucléaire comprenant lesdits composants gazeux non éliminés par ledit séparateur de gouttelettes d'eau (6), qui est délivré en sortie depuis ledit séparateur de gouttelettes d'eau (6), dans ledit boîtier (3, 3A) pour être distribué vers l'élément de traitement de composant gazeux (22, 15, 17, 19, 21).

2. Équipement de traitement de gaz (1, 1A-1E) selon la revendication 1, dans lequel ledit échangeur de chaleur (4, 4A) est disposé sur un côté amont dudit élément de traitement de composant gazeux (22, 15, 17, 19, 21) dans ledit boîtier (3, 3A).

3. Équipement de traitement de gaz (1B, 1C) selon la revendication 1, dans lequel ledit échangeur de chaleur (4A) est installé sur une surface extérieure dudit boîtier (3A) .

4. Équipement de traitement de gaz (1, 1A-1E) selon l'une quelconque des revendications 1 à 3, comprenant :
un trajet de tuyau d'évacuation de gouttelettes d'eau (11) pour introduire lesdites gouttelettes d'eau séparées par ledit séparateur de gouttelettes d'eau (6) pour adsorber lesdits composants gazeux dans ladite cuve de confinement primaire (13).

5. Équipement de traitement de gaz (1, 1A-1E) selon l'une quelconque des revendications 1 à 3, dans lequel ledit appareil de traitement de gaz (2, 14, 16, 18, 20) est l'un quelconque d'un appareil de traitement d'hydrogène autocatalytique passif (2), un appareil de traitement d'hydrogène à membrane perméable à l'hydrogène (14), un appareil de traitement d'hydrogène catalytique à composite d'ammoniac (16), un appareil d'adsorption d'iode (18), et un appareil de traitement d'adsorption de gaz noble (20).

6. Équipement de traitement de gaz (1) selon la revendication 5, dans lequel :
ledit appareil de traitement de gaz (2) est un appareil de traitement d'hydrogène autocatalytique passif (2) ; et
ledit élément de traitement de composant gazeux (22) installé dans ledit boîtier (3) dudit appareil de traitement d'hydrogène autocatalytique passif (2) est une couche catalytique (22) pour combiner de l'oxygène et de l'hydrogène, qui est ledit composant gazeux.

7. Équipement de traitement de gaz (1A) selon la revendication 5, dans lequel :
ledit appareil de traitement de gaz (14) est un appareil de traitement d'hydrogène à membrane perméable à l'hydrogène (14) ; et
ledit élément de traitement de composant gazeux (15) installé dans ledit boîtier (3) de ledit membrane perméable à l'hydrogène appareil de traitement d'hydrogène (14) est une membrane perméable à l'hydrogène (15).

8. Équipement de traitement de gaz (1B) selon la revendication 5, dans lequel :
ledit appareil de traitement de gaz (16) est un appareil de traitement d'hydrogène catalytique à composite d'ammoniac (16) ; et
ledit élément de traitement de composant gazeux (17) installé dans ledit boîtier (3A) dudit appareil de traitement d'hydrogène catalytique à composite d'ammoniac (16) est une couche catalytique (17) pour permettre que l'hydrogène et l'azote étant lesdits composants gazeux réagissent et composent de l'ammoniac.

9. Équipement de traitement de gaz (1C) selon la revendication 5, dans lequel
ledit appareil de traitement de gaz (18) est un appareil d'adsorption d'iode (18) ; et
ledit élément de traitement de composant gazeux (19) installé dans ledit boîtier (3A) dudit appareil d'adsorption d'iode (18) est une couche d'adsorbant d'iode (19) .

10. Équipement de traitement de gaz (1D) selon la revendication 5, dans lequel :
ledit appareil de traitement de gaz (20) est un appareil de traitement d'adsorption de gaz noble (20) ; et
ledit élément de traitement de composant gazeux (21) installé dans ledit boîtier (3) dudit appareil de traitement d'adsorption de gaz noble (20) est une couche d'adsorbant de gaz noble (21).

11. Équipement de traitement de gaz pour une centrale nucléaire, l'équipement de traitement de gaz comprenant :
l'équipement de traitement de gaz (1, 1A-1E) selon la revendication 1, et un deuxième équipement de traitement de gaz (1, 1A-1E),
dans lequel ledit deuxième équipement de traitement de gaz (1, 1A-1E) comprend un deuxième appareil de traitement de gaz (2, 14, 16, 18, 20) pour traiter d'autres composants gazeux inclus dans ledit gaz traversant ledit élément de traitement de composant gazeux (22, 15, 17, 19, 21) dudit équipement de traitement de gaz (1, 1A-1E) selon la revendication 1,
et un deuxième séparateur de gouttelettes d'eau (6) ;
dans lequel ledit deuxième appareil de traitement de gaz (2, 14, 16, 18, 2 0) comprend un deuxième boîtier (3, 3A) et un deuxième élément de traitement de composant gazeux (22, 15, 17, 19, 21) installé dans ledit deuxième boîtier (3, 3A) pour traiter lesdits autres composants gazeux ;
dans lequel un deuxième échangeur de chaleur (4, 4A) est installé dans ledit deuxième boîtier (3, 3A), le deuxième échangeur de chaleur (4, 4A) étant agencé pour chauffer le gaz dans le deuxième boîtier (3, 3A) étant distribué vers le deuxième élément de traitement de composant gazeux (22, 15, 17, 19, 21),
dans lequel le deuxième échangeur de chaleur (4, 4A) est agencé pour chauffer le gaz dans le deuxième boîtier (3, 3A) par échange de chaleur d'un gaz, qui comprend de la vapeur d'eau et lesdits autres composants gazeux, distribué vers le deuxième échangeur de chaleur (4, 4A) depuis ledit équipement de traitement de gaz (1, 1A-1E) selon la revendication 1, avec le gaz dans le deuxième boîtier (3, 3A) ;
dans lequel ledit deuxième séparateur de gouttelettes d'eau (6) est raccordé audit deuxième échangeur de chaleur (4, 4A) et est agencé pour éliminer les gouttelettes d'eau qui sont générées dans ledit deuxième échangeur de chaleur (4, 4A) par condensation de ladite vapeur d'eau dans ledit gaz distribué depuis l'équipement de traitement de gaz (1, 1A-1E) selon la revendication 1, conjointement avec une partie desdits autres composants gazeux adsorbés sur lesdites gouttelettes d'eau, et
dans lequel un deuxième trajet de tuyau (9) est disposé entre ledit deuxième séparateur de gouttelettes d'eau (6) et ledit deuxième boîtier (3, 3A) pour introduire ledit gaz distribué depuis le traitement de gaz selon la revendication 1 comprenant lesdits autres composants gazeux non éliminés par ledit deuxième séparateur de gouttelettes d'eau (6), qui est délivré en sortie depuis ledit deuxième séparateur de gouttelettes d'eau (6), dans ledit deuxième boîtier (3, 3A) devant être distribué vers le deuxième élément de traitement de composant gazeux (22, 15, 17, 19, 21) .

12. Équipement de traitement de gaz selon la revendication 11, dans lequel ledit deuxième élément de traitement de composant (22) est une couche catalytique (22) pour combiner de l'oxygène et de l'hydrogène qui est un autre composant gazeux.

13. Équipement de traitement de gaz selon la revendication 12, dans lequel ledit élément de traitement de composant dudit équipement de traitement de gaz (1C) selon la revendication 1 est une couche d'adsorbant d'iode (19) pour éliminer l'iode radioactif (19) qui est ledit composant gazeux.
